# EUROPEAN PATENT SPECIFICATION

(11) **EP 4 350 154 B1**
(45) Date of publication and mention of the grant of the patent: **17.09.2025**
(21) Application number: 23201354.0
(22) Date of filing: 03.10.2023
(51) Int. Cl.: F15B 21/044, B62D 33/067

(54) **HYDRAULIC TILTING DEVICE INCLUDING DE-AERATOR VALVE**
HYDRAULISCHE KIPPVORRICHTUNG MIT ENTLÜFTUNGSVENTIL
DISPOSITIF D'INCLINAISON HYDRAULIQUE COMPRENANT UNE SOUPAPE DE DÉSAÉRATION

(30) Priority: 07.10.2022 NL 2033256
(43) Date of publication of application: 10.04.2024
(73) Proprietor: Power Packer North America, Inc., Westfield WI 53964 (US)
(72) Inventor: LEFERINK, Jelmer Gerard, 7575 AT OLDENZAAL (NL)
(74) Representative: EP&C

(56) References cited:
- EP-A1- 0 818 629
- CN-U- 215 486 942
- DE-A1- 102019 008 675
- JP-A- H02 186 108

## Description

The invention relates to a hydraulic tilting device for tilting a cab of a vehicle between a driving position and a tilted position.

JP H02 186108 which is published in 1990 discloses a double acting hydraulic cylinder which is arranged to extract air from a lower side hydraulic chamber to an upper side hydraulic chamber. The cylinder has a piston including an air extraction valve with a movable restrictor and combined with a check valve. Air collected in the lower side hydraulic chamber passes through the movable restrictor of the air extraction valve and flows to the upper side hydraulic chamber through the check valve.

This known arrangement of an air extraction valve in the piston is not suitable for tilting a cab of a vehicle. The piston with air extraction valve may impair a proper functioning of a lost motion arrangement of a hydraulic tilting device. In cooperation with a cabin suspension relative to a chassis, the lost motion arrangement allows a reciprocating motion of a piston-piston rod assembly of a tilting cylinder during a ride of a truck vehicle. A minor air inclusion is then desired for a proper functioning of the lost motion arrangement. For the reason that the air extraction valve in the piston excludes all present air in the hydraulic cylinder during a ride, this known solution for de-aerating is not suitable for a hydraulic tilting device. An alternative solution of de-aerating a hydraulic tilting cylinder which does not affect a lost motion arrangement is desired.

Another disadvantage of this known arrangement of the air extraction valve in the piston is that this arrangement limits manufacturing possibilities. It is desired to manufacture a piston-piston rod assembly by friction welding. However, this is not allowed by the presence of the piston held components which might then get damaged.

US7.055.637 discloses a hydraulic tilting device for a cab which is resiliently supported on a chassis of a vehicle. The tilting device includes a reservoir for hydraulic fluid and a pump which is connected to the reservoir. The tilting device also includes a double-acting hydraulic tilting cylinder including a push and pull chamber for tilting the cab. A lost-motion arrangement is provided at the tilting cylinder to allow a reciprocating movement of a piston-piston rod assembly within a lost-motion range. The lost-motion arrangement is configured to allow the cab to move relative to the chassis.

A flow restrictor is provided at a suction line originating from the pull chamber. This flow restrictor cooperates via a control line with a nonreturn valve in a pressure line which is connected with the push chamber to open the nonreturn valve when sufficient hydraulic pressure is present. The tilting device further comprises a reservoir line which is connected to the pressure line, and which is provided with a reservoir valve combined with another flow restrictor to limit a speed of a movement of the cab.

By operating the hydraulic tilting device, a cab of a vehicle can be positioned in a tilted position in which, for example, maintenance can be carried out on the engine beneath the cab. In practice, typically, the hydraulic tilting device is only used incidentally. Many driving hours pass before the hydraulic tilting device is used again.

A technical problem that may occur is that an air volume may get captured inside the pull chamber. This may be caused by the reciprocating motion of the piston-piston rod assembly provided by the lost-motion arrangement. Especially, after many driving hours and a long period of no tilt by the hydraulic tilting device, this air volume may substantially increase. Although during a vehicle ride, air inclusion may contribute to ride comfort, for overturning a cabin relative to a chassis, the presence of an air volume in the pull chamber is undesired, because this air volume may affect a smooth operation of the hydraulic tilting device. In addition, aeration may deteriorate the hydraulic fluid which may reduce a performance of the device over time.

The general object of the present invention is to at least partially eliminate the above mentioned drawback and/or to provide a usable alternative. More specific, it is an object of the invention to provide a hydraulic tilting device which is featured to prevent negative consequences as a result of air trapped in the pull chamber.

Regarding the above-mentioned prior art, it is remarked that any discussion of documents, acts, materials, devices, articles or the like included in the present specification is for the purpose of providing a context for the present invention, and is not to be taken as an admission that any such matters form part of the prior art or were before the priority date of each claim of this application common general knowledge in the field relevant to the present invention.

According to the invention, this object is achieved by a hydraulic tilting device according to claim 1.

According to the invention, a hydraulic tilting device is provided which is in particular suitable for tilting a cab between a driving position and a tilted position.

The hydraulic tilting device comprises a double acting hydraulic tilting cylinder operable by a drive unit. The double acting hydraulic tilting cylinder is configured for tilting a vehicle cab. The tilting cylinder has a cylinder housing including a cylinder space in which a piston-piston rod assembly is movable in a reciprocating manner. The piston-piston rod assembly forms a pull chamber and a push chamber in the cylinder space for respectively retracting and extending the piston-piston rod assembly relative to the cylinder housing. The piston-piston rod assembly is movable from a retracted position, a so called driving position, to an extended position, a so called tilt position of a vehicle cab.

The pull chamber has a first pull connection which is fluidly connected to a suction line. When extending the piston-piston rod assembly, hydraulic fluid is discharged from the pull chamber via the first pull connection through the suction line. The first pull connection is positioned above the piston when the piston-piston rod assembly is positioned in the extended position.

The pull chamber further has a second pull connection. The second pull connection is in fluid communication with the pull chamber. In the retracted position of the piston-piston rod assembly, the second pull connection is positioned above the piston, to allow a supply of hydraulic fluid to the pull chamber while being in the retracted position. In particular, the second pull connection is positioned closer to the piston regarding to the first pull connection. Preferably, the first pull connection is positioned at an upper region of the cylinder housing. The second pull connection may be positioned below the first pull connection. The second pull connection may be positioned at a bottom region of the cylinder housing. In that embodiment, the second pull connection is in fluid communication with the pull chamber when the piston-piston rod assembly is positioned in the retracted position, and when the piston-piston rod assembly is extended to the extended position, the second pull connection may then be positioned below the piston and in fluid communication with the push chamber.

The drive unit comprises a reservoir for containing hydraulic fluid and a pump for pressurising the hydraulic tilting device. The reservoir may be an open or closed type reservoir. The drive unit is fluidly connected by a main pressure line to the pressure connection of the push chamber. Further, the drive unit is fluidly connected by a bypass line to the second pull connection of the pull chamber. The bypass line is arranged in parallel with the main pressure line. In other words, the pressure line is branched into the main pressure line and the bypass line.

The hydraulic tilting device further comprises a flow restrictor which is positioned in the suction line. Preferably, the flow restrictor is a one-way flow restrictor serving to restrict only in a flow direction away from the pull chamber. A one-way flow restrictor may be beneficial in that a hydraulic fluid flow will not be restricted when returning the hydraulic tilting device to the retracted position by supplying hydraulic fluid to the pull chamber.

Further, the hydraulic tilting device comprises a de-aerator valve. The de-aerator valve is positioned in the bypass line. The de-aerator serves to open or close the bypass line. The de-aerator valve is a pressure operated valve which is normally in an open mode, so called normally open. Without pressure, the de-aerator valve is open, and under pressure, the de-aerator valve is closed. In particular, the de-aerator valve is biased by a spring.

According to the invention, the presence of the de-aerator valve in the bypass line provides an improvement. The de-aerator valve is connected to the pull chamber of the tilting cylinder. The bypass line extends in between the pump and the pull chamber for supplying hydraulic fluid to the pull chamber via the bypass line. Advantageously, in an initial stage of operation, hydraulic fluid is supplied to the pull chamber via the open de-aerator valve to push out any air volume inside the pull chamber before extending the tilting cylinder for a turnover. The air volume is pushed out the pull chamber via the first pull connection and the suction line. By removing any trapped air from the pull chamber before moving the piston-piston rod assembly and starting a tilting operation, the tilting cylinder can be moved in a smooth manner.

The operation proceeds as follows. As said this, in the initial stage, the bypass line is arranged to bypass the main pressure line which is connected to the push chamber. A fluid flow is supplied via the open de-aerator valve to the pull chamber of the tilting cylinder while bypassing the main pressure line. By supplying hydraulic fluid to the pull chamber, a possible present trapped air volume in the pull chamber is discharged via the first pull connection and the suction line to e.g. the reservoir or an air relief valve. Preferably, the first pull connection is positioned at an upper region of the cylinder housing, e.g. at an end face or at a circumferential surface near the end face. An airflow passes through the flow restrictor in the suction line until substantially all trapped air volume is discharged from the pull chamber. When substantially all trapped air is discharged, hydraulic fluid will flow through the flow restrictor which causes the hydraulic pressure in the hydraulic tilting device to increase. The de-aerator valve in the bypass line is arranged to close on the increase of the hydraulic pressure as will be explained hereafter. The bypass line is then closed by the de-aerator valve and hydraulic fluid will flow through the main pressure line to the push chamber to start the tilting motion. Herewith, a degassing step is carried out in the operation of the hydraulic tilting device to discharge any present air volume in the pull chamber before extending the piston-piston rod assembly of the tilting cylinder.

The de-aerator valve is arranged to close off the bypass line in case a predetermined hydraulic pressure is exceeded. As explained above, the hydraulic pressure increases after discharging the air volume from the pull chamber of the tilting cylinder and hydraulic fluid commences to flow through the flow restrictor in the suction line. The de-aerator valve is a pressure operated valve. The de-aerator valve has a control line to switch from the open to the closed position under the influence of hydraulic pressure. When a predetermined pressure threshold is exceeded, the de-aerator valve closes. When hydraulic fluid passes through the flow restrictor instead of trapped air, the hydraulic pressure will increase. This caused change of pressure will switch the de-aerator valve from an open to a closed position.

Preferably, the de-aerator valve is a pressure operated two position control valve. The two position control valve has a biased open position and a pressure operated closed position. This de-aerator valve is a spring return valve which means that the open position is obtained by a spring force when a counter pressure falls away. In particular, the de-aerator valve is a two way/two position control valve (2/2 type) having a first valve port and a second valve port.

In an embodiment of the hydraulic tilting device according to the invention, the de-aerator valve includes a flow restrictor. The flow restrictor may be provided at an inlet or outlet of a valve housing of the de-aerator valve. Preferably, the flow restrictor is provided at the outlet of the valve housing which is beneficial in maintaining a minimal operational pressure.

In an embodiment of the hydraulic tilting device according to the invention, the de-aerator valve has a bi-directional open mode. The bi-directional de-aerator valve can be incorporated in a subcircuit of the hydraulic tilting device which subcircuit forms a lost motion arrangement. A nonreturn valve may be positioned in the bypass line at a position downstream of the de-aerator valve.

In an embodiment of the hydraulic tilting device according to the invention, the de-aerator valve is structured by a valve housing which includes a piston chamber. The piston chamber has an inlet and an outlet to allow a fluid flow through the piston chamber. A biased valve piston is positioned in the piston chamber to open or close a passageway in between the inlet and the outlet of the piston chamber. The valve piston has a valve piston body which is supported by a spring. Preferably, the valve piston body is a slidable valve body. The spring exerts a spring force onto the valve piston body to hold the valve piston body in an open position. Without a counterforce, the valve piston body is in the open position which means that the de-aerator valve is normally open. When a hydraulic pressure increases, the spring force is countered and the valve piston body moves away from the open position. The passageway for a fluid flow from the inlet to the outlet then gets blocked. In particular, the valve piston body seals off the outlet of the de-aerator valve by a piston block seal at an outer circumference of the valve piston body when this piston block seal mates with the outlet of the piston chamber. Herewith, the de-aerator valve is structured to remain open during a stage of degassing the tilting cylinder in which the hydraulic pressure of the device maybe at a minimal pressure, e.g. at about an atmospheric pressure and thereafter closes the bypass line by shutting off the passageway when the hydraulic pressure increases and exceeds a threshold pressure.

In an embodiment of the hydraulic tilting device according to the invention, the de-aeration valve comprises a spring, in particular a push spring, more in particular a spiral push spring, to provide a pretensioned to the valve piston body to hold the valve piston body in the open position. Herewith, the outlet of the de-aerator valve remains open in absence of a counterforce on the piston valve body provided by a hydraulic pressure.

In an embodiment of the hydraulic tilting device according to the invention, the valve piston body comprises a piston channel which provides a passageway through the valve piston for establishing an open communication between the inlet and the outlet. Particularly, the piston channel comprises an axial and a lateral bore hole to be mated with at least one of the inlet and outlet to establish an open connection.

In an embodiment of the hydraulic tilting device according to the invention, the valve piston is provided with a piston block seal at an outer circumference. When mating the piston block seal with one of the inlet or outlet, the passageway through the piston valve is sealed off.

In an embodiment of the hydraulic tilting device according to the invention, the de-aerator valve comprises a non-return valve, also called a check valve, allowing only a fluid flow in one direction through the de-aerator valve. The non-return valve is positioned in the bypass line to prevent a return flow of hydraulic fluid in a flow direction away from the pull chamber.

According to the invention, the tilting cylinder is a cab tilt cylinder which comprises a lost-motion arrangement. Such a lost-motion arrangement is a well-known feature of a cab tilt cylinder. The lost-motion arrangement allows the piston-piston rod assembly to be mobile in a retracted position to anticipate on spring movements of a cabin relative to a chassis. The lost-motion arrangement provides a lost-motion range in which the piston-piston rod assembly is able to move up and down when the cab, which is in its driving position, executes spring movements. An exemplary configuration of a lost-motion arrangement is disclosed in US7.055.637B2 as described in the introductional part.

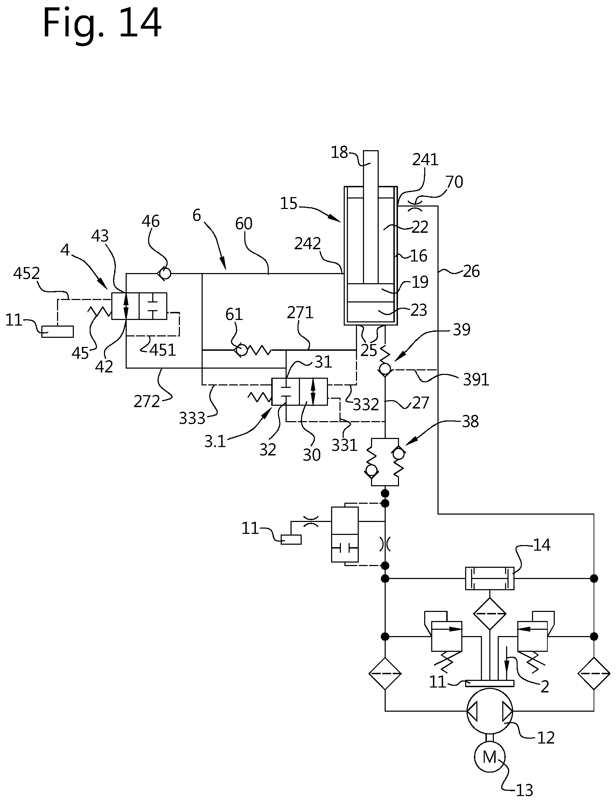

Typically, a lost-motion arrangement comprises a lost motion passage which extends in between the pull and push chamber, wherein the lost-motion passage is provided with a lost-motion nonreturn valve. Several embodiments of lost-motion arrangements are illustrated in Fig. 14-18.

Typically, a lost motion arrangement comprises a pilot operated check valve (POCV) which is controlled by a pilot line in fluid communication with the suction line. The POCV is open in a flow direction to the tilting cylinder and closed in a direction away from the tilting cylinder. The POCV serves to keep the piston-piston rod assembly in a hold position when the operational pressure becomes below a predetermined pressure value. When for example the pump is switched off, the piston-piston rod assembly is held in position and does not move due to a load acting on the piston-piston rod assembly. The pilot line is connected to open the check valve to allow a discharge of hydraulic fluid from the push chamber at operational hydraulic pressure. Herewith, a tilting motion can be returned to the retracted position.

In an embodiment of the hydraulic tilting device according to the invention, the lost-motion arrangement comprises a control valve. In particular, the control valve is a pressure operated two position valve being arranged in a normally closed position, more in particular, the control valve is a two way/two position valve. The control valve is operable in a closed position by a spring force and pressure operated via a control line in an open position.

In an embodiment of the hydraulic tilting device according to the invention, the control valve is fluidly connected to the pressure line. The control valve has a first valve port fluidly connected to the pressure line and a second valve port fluidly connected to the branched main pressure line and bypass line.

The hydraulic tilting device is a cabin tilt system for overturning a vehicle cabin. Further, the invention relates to a vehicle including a tiltable drivers cabin, which vehicle comprises a cabin tilt system including a cab tilt cylinder.

The invention will be explained in more detail with reference to the appended drawings. The drawings show a practical embodiment according to the invention, which may not be interpreted as limiting the scope of the invention. Specific features may also be considered apart from the shown embodiment and may be taken into account in a broader context as a delimiting feature, not only for the shown embodiment but as a common feature for all embodiments falling within the scope of the appended claims, in which:
Fig. 1 shows a simplified hydraulic scheme of an embodiment of a hydraulic tilting system including a de-aerator valve for discharging a trapped air volume from a pull chamber of a hydraulic tilting cylinder;
Fig. 2 and 3 show the de-aerator valve in schematic views in respectively open and closed position;
Fig. 4 - 9 show successive stages in operating the hydraulic tilting device including a nonreturn valve and a POCV to move the tilting cylinder from a driving position to a tilted position;
Fig. 10 and 11 show an embodiment of a valve piston body being operable between an open position and closed position;
Fig. 12 and 13 show another embodiment of a de-aerator valve including a rotatable valve piston body;
Fig. 14 shows a prior art hydraulic scheme of a cabin tilt system including a lost motion arrangement and further featured with a de-aerator valve according to the invention;
Fig. 15 shows another detailed hydraulic scheme of an embodiment of a hydraulic tilting system according to the invention including a de-aerator fluidly connected downstream of a first control valve and upstream a second control valve;
Fig. 16 shows a variant on the detailed hydraulic scheme of Fig. 15 in which the de-aerator valve is fluidly connected downstream of a second control valve;
Fig. 17 shows another hydraulic scheme of an embodiment of a hydraulic tilting system according to the invention including an open reservoir; and
Fig. 18 shows a prior art hydraulic scheme of a cabin tilt system including a lost motion arrangement and further improved according to the invention by a presence of a de-aerator valve being positioned in a bypass line which is fluidly connected to a second pull connection and which by pass line is in parallel with a main pressure line connected to a pressure connection.

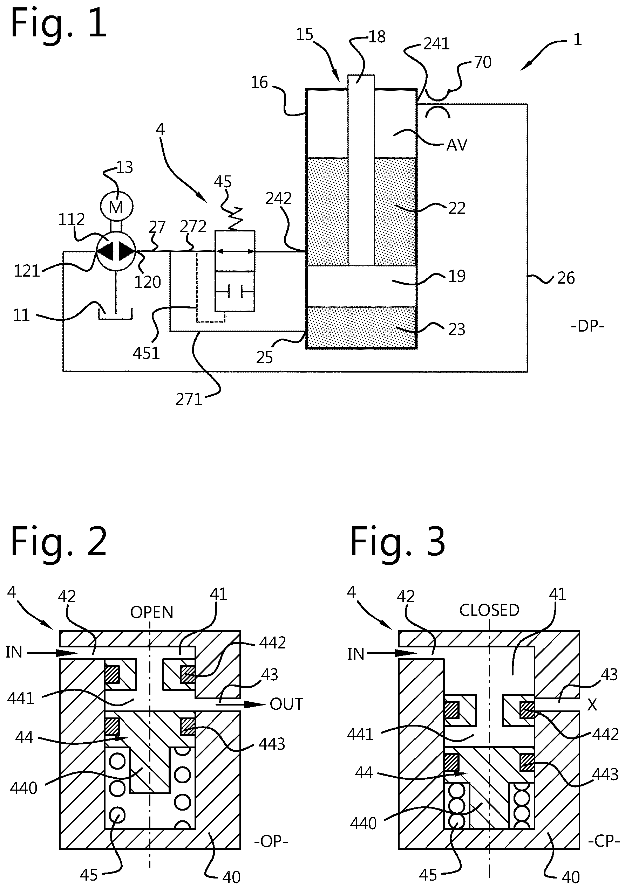

In the appended drawings, identical reference signs are used to indicate identical or functionally similar components. Figures 1 to 13 show hydraulic tilting devices not covered by the claims as they do not show a lost-motion arrangement however of use for understanding the invention as disclosed in Fig.14-19, which show the tilting device having a lost-motion arrangement with a de-aerator valve in a by pass line.

In the figures, several embodiments of a hydraulic tilting device 1 are illustrated. The tilting device 1 is arranged to tilt a driver's cab of a vehicle, in particular of a lorry. The hydraulic tilting device is provided for the purpose of tilting the cab forward and back again. Cabs of this type are usually arranged on a chassis of the vehicle and are tiltable connected to the chassis via pivot means including latches. The pivot means are configured in such a way that the cab can tilt between a driving position in which the vehicle can be driven, and a tilted position, generally tilted forwards, in which, for example, maintenance can be carried out on the vehicle, in particular on the engine of the vehicle which is situated completely or partially beneath the cab.

The hydraulic tilting device 1 is arranged to move the cab along a tilting path from the driving position to the tilted position. Generally this tilting path includes a dead point. Moving from the driving position and before reaching the dead point, the cab is pushed by a tilting cylinder 15 of the hydraulic tilting device. After passing the dead point, a weight of the cab exerts a pulling force onto the tilting cylinder.

Vehicles of this type are usually provided with resilient cab-support means which support the cab in the driving position, in such a manner that, in the driving position, the cab can spring up and down with respect to the chassis, in order in this way to increase the driver's comfort. To enable this relative motion of the cab, the hydraulic tilting device is provided with a lost-motion arrangement.

Fig. 1 shows a double-acting linear hydraulic tilting cylinder 15 for tilting the vehicle cab. The cylinder 15 comprises a cylinder housing 16 in which there is a cylinder space. A piston-piston rod assembly can move in a reciprocating manner in the cylinder space. The piston-piston rod assembly comprises a piston 19 and a piston rod 18 which is fixedly connected thereto.

The cylinder 15 is usually arranged between the cab and the chassis of the vehicle. The cylinder housing 16 is generally pivotally connected to the chassis by an eyelet, and the end of the piston rod 18 is generally pivotally connected to the cab by an opposing eyelet.

In the cylinder space, the piston-piston rod assembly 18, 19 forms a pull chamber 22 and a push chamber 23. A first and second pull connection 241, 242 are associated with the pull chamber 22. A pressure connection 25 is associated with the push chamber 23. A first hydraulic connecting line 26 is connected to the first pull connection 241, and a second hydraulic connecting line 27 is connected to the pressure connection 25 and the second pull connection 241. On the other ends, the lines 26, 27 are connected to an associated port of a pump 12. Here, the pump 12 is a bi-directional pump. In a tilting operation, when feeding hydraulic fluid to the pull chamber 22, the piston-piston rod assembly retracts. When feeding hydraulic fluid to the push chamber 23, the piston-piston rod assembly extends.

The tilting device 1 comprises a drive unit 10 which has a reservoir 11 for storing hydraulic fluid. Here, the reservoir 11 is an open reservoir.

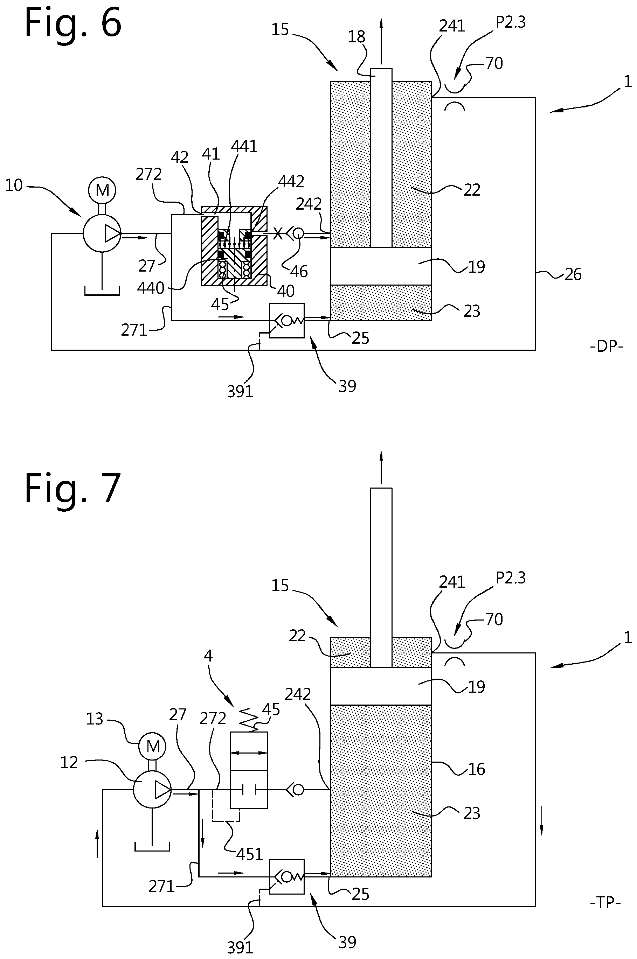

The drive unit 10 comprises a pump 12 for pressurising the tilting cylinder. The pump 12 is connected to the reservoir 11. The pump 12 may be a manual pump, but is preferably an electrically driven pump of the reversible type. The driven pump 12 includes a motor 13, in particular a brushless DC motor. The pump 12 has a first port 120 and a second port 121 which respectively serves as a delivery port or suction port depending on a pump direction, see also fig. 7.

The pump 12 is connected by a pressure line 27 to the push chamber 23 of the tilting cylinder and by a suction line 26 to the pull chamber 22 of the tilting cylinder.

The pressure line 27 branches into a main pressure line 271 and a bypass line 272. Via the main pressure line 271, the pump 12 is connected to a pressure connection 25 at the push chamber 23. The bypass line 272 is positioned in between the pump 12 and the pull chamber 22 of the tilting cylinder 15. The bypass line 272 is connected to a second pull connection 242 of the pull chamber.

The pump 12 is connected via the suction line 26 to the first pull connection 241 of the pull chamber 22. A flow restrictor 70 is positioned in the suction line 26.

The bypass line 272 comprises a de-aerator valve 4 for de-aerating the pull chamber of the tilting cylinder of the hydraulic tilting device. By de-aerating the pull chamber, an air volume is discharged from the pull chamber. In the driving position, an intrusion of an air volume into the hydraulic tilting device may occur. In particular, a motion of the piston-piston rod assembly of the tilting cylinder during a vehicle ride may cause the intrusion of the air volume. The de-aerator valve 4 being positioned in the bypass line 272 allows a fluid flow through the pull chamber to push out the intruded air volume.

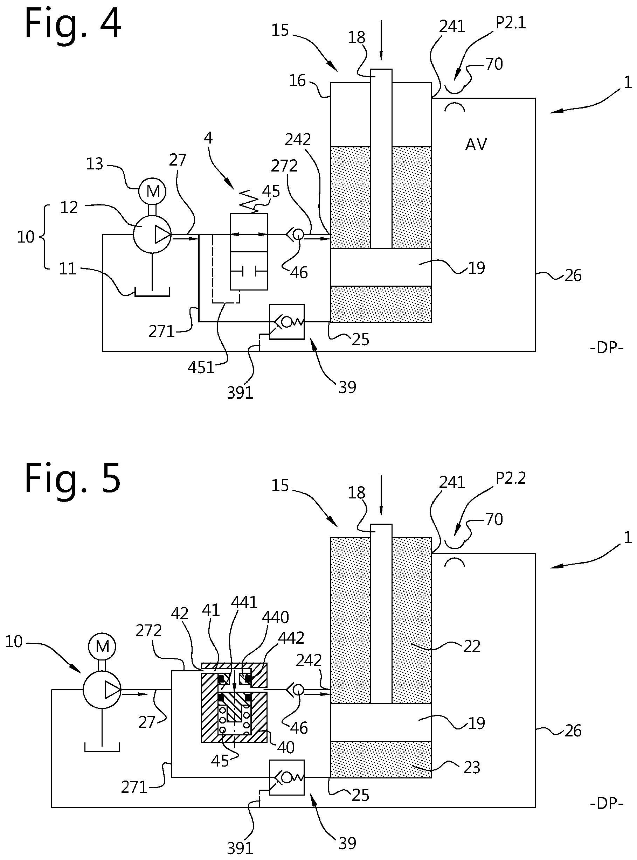

As explained in the description above and in further detail hereafter with reference to figures 4-8 in a practical embodiment, in an initial stage of operating the hydraulic tilting device 1, the fluid flow will cause a trapped air volume inside the pull chamber to leave the pull chamber via the first pull connection 241 through the flow restrictor 70 in the suction line. Once the air volume has passed and hydraulic fluid commences to pass through the flow restrictor, an operating pressure will increase. This increase in hydraulic pressure will cause the de-aerator valve 4 to switch to the closed position, whereafter hydraulic fluid can be supplied to the push chamber 23 via the main pressure line 271 to start a tilting motion. Herewith, the presence of the de-aerator valve 4 in the bypass line 272 provides an advantage in that the tilting cylinder 15 is degassed before starting the tilting motion. The de-aerator valve 4 in the hydraulic circuit of the hydraulic tilting device 1 contributes to a smooth operation of the tilting cylinder.

In Fig. 1, the de-aerator valve 4 is shown by a hydraulic symbol which represents a 2-way/2 position pressure operated control valve. The control valve is a spring return control valve and has normally an open position when hydraulic pressure is absent. An increase in pressure will cause the pressure operated control valve to switch to a closed position. A de-aerotor control line 451 is provided to let the control valve switch from the normally open position to the closed position. A spring 45 is provided to let the control valve switch back to the open position.

Fig. 2 and 3 schematically show an embodiment of the de-aerator valve 4. The de-aerator valve 4 comprises a valve housing 40 which includes a piston chamber 41. The piston chamber 41 has an inlet 42 and an outlet 43 to establish a fluid flow through the piston chamber 41. The piston chamber 41 forms an inner space for housing a valve piston 44. The valve piston 44 is a biased valve piston including a spring 45 which exerts a spring force on the valve piston body 440 to keep the valve piston in a normally open position OP providing an open communication between the inlet 42 and the outlet 43. The valve piston body 440 includes a piston channel 441 to establish or interrupt an open communication between the inlet 42 and the outlet 43 of the de-aerator valve 4. In particular, the spring 45 is a push spring to exert a pushing force on the valve piston body 440. The outlet 43 is normally open by the spring force. In fig. 2, the valve piston body 440 is positioned in a position providing an open communication between the inlet and outlet 42, 43 of the de-aerator valve 4.

The outlet 43 can be closed by a movement of the valve piston body 440 which is shown in fig. 3. In fig. 3, the de-aerator valve 4 is in a closed position CP. In operation, the valve piston body 440 moves to the closed position CP when a hydraulic pressure on the valve piston body 440 increases. As shown in fig. 1, an increase of the hydraulic pressure in the hydraulic tilting device is caused by the flow restrictor 70 which is positioned in the suction line 26. With respect to the de-aerator valve 4, the flow restrictor 70 is positioned at an opposite side of the pull chamber. In other words, the pull chamber is positioned in between the de-aerator valve 4 and the flow restrictor 70.

Fig. 4-9 show in successive views a tilting operation of the hydraulic tilting device 1 in which the piston-piston rod assembly 18, 19 is moved from a driven position DP to a tilted position TP. Fig. 1 shows the functionality of the de-aerator valve 4. Here in Fig. 4-8, a hold-function is added in the hydraulic circuit of the hydraulic tilting device for holding the piston-piston rod assembly in position in case of a decrease of hydraulic pressure. The hold-function means that the piston-piston rod assembly 18, 19 is maintained in position once the pump 12 is switched off.

Fig. 4 shows the hydraulic tilting device in an initial condition in which an air volume AV may be trapped inside the pull chamber 22. The tilting cylinder 15 is positioned in a driving position DP.

Fig. 4 shows an initial operation of the drive unit 10 to start a tilting movement of a vehicle cab. Before starting an operation of the pump 12, a hydraulic pressure of the tilting device may be at an atmospheric pressure. An open type reservoir 11 may be arranged in the hydraulic circuit for atmospheric pressure operation. Starting the drive unit 10 will pressurise the hydraulic tilting device. Due to the presence of the air volume AV, the start of the pumping of hydraulic fluid will initially cause a fluid flow to the pull chamber through the open de-aerator valve 4. Hydraulic fluid will be pumped through the open de-aerator valve 4 (which is normally in the open position as shown in fig. 2) towards the pull chamber 22. As a consequence, the air volume AV which is trapped in the pull chamber 22 will be pushed out of the pull chamber through the first pull connection 241 and through the flow restrictor 70. In this initial stage of discharging the air volume AV from the pull chamber, the hydraulic pressure will hardly increase. The initial pressure P2_1 may remain at a level of about atmospheric pressure.

As shown in fig. 5, after the total air volume AV is discharged from the pull chamber 22, hydraulic fluid will pass through the flow restrictor 70. Instead of air, now hydraulic fluid passes through the flow restrictor 70 which will cause the hydraulic pressure to increase to an increased pressure P2_2. The increase of hydraulic pressure in the tilting device 1 causes the de-aerator valve 4 to switch from the open position OP to a closed position CP as shown in fig. 3. As illustrated by the arrow inside the piston channel 441, the hydraulic pressure acts against the spring force provided by the spring 45 to move the valve piston body 440, such that the valve piston body 440 closes the passageway of a fluid flow between the inlet 42 to the outlet 43.

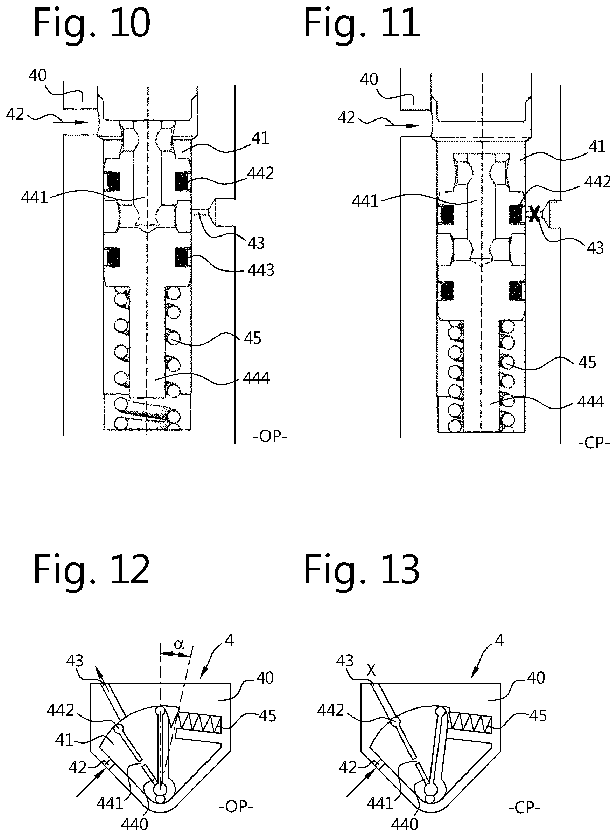

Here, the main pressure line 271 is provided with a pilot operated check valve 39 (POVC) for opening and closing the main pressure line 271. In the driving position DP, the check valve 39 is normally closed (as shown in fig. 13). To tilt the cabin, the check valve 39 is opened via a control line 391 which is fluidly connected with the suction line 26. The operational pressure in the suction line 26 determines an opening or closing of the check valve 39. When the operational pressure in the suction line 26 increases, the check valve 39 opens to enable a fluid flow from the pump 12 via the main pressure line 271 to the push chamber 23.

Fig. 6 shows a fully closed de-aerator valve 4. Here, the valve piston body 440 closes the outlet 43. The valve piston body 440 comprises a piston block seal 442 which slides in front of the outlet 43 such that the outlet 43 is sealed off.

When the hydraulic pressure further increases from the pressure P2_2 to an operational pressure P2_3, the control valve 3 is opened and a tilting operation is started as shown by the upwardly directed arrow at the piston rod 18 in fig. 6. Here, the check valve 39 has a control line 391 (pilot line) which switches the check valve 39 to an open position above a threshold pressure, the operating pressure P2_3. The open check valve 39 allows a fluid flow to enter the push chamber 23 of the tilting cylinder 15. Now, the piston rod 18 of the tilting cylinder 15 extends as indicated by the arrow to move the piston-piston rod assembly from the driving position DP to the tilted position TP.

Fig. 7 shows the hydraulic circuit of fig. 6 in which the embodiment of the de-aerator valve 4 is replaced by the hydraulic symbol of the pressure operated 2-position control valve. The control valve 4 is shown in the closed position CP which is obtained when the bypass line 272 is under hydraulic pressure P2_3.

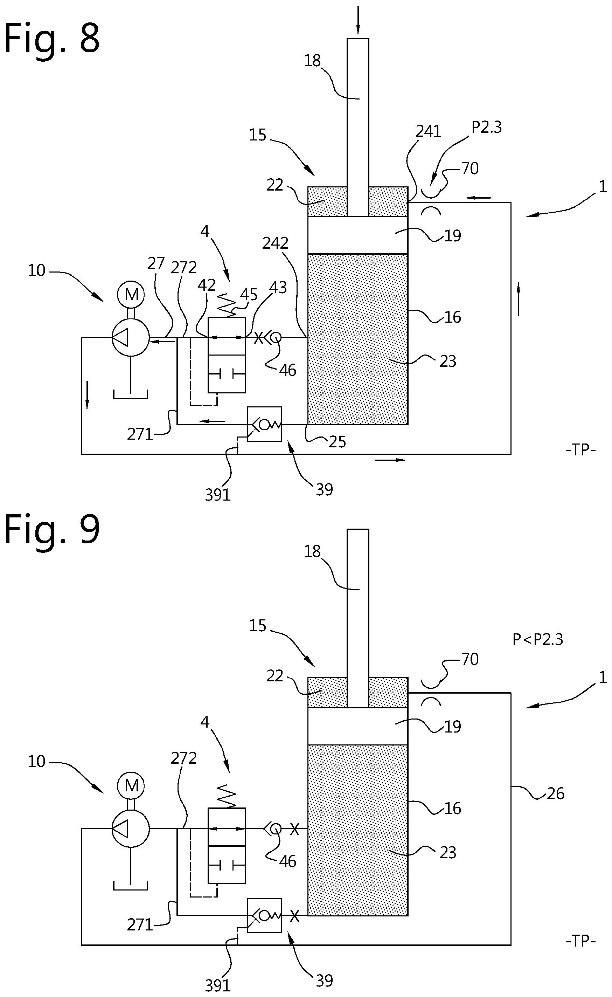

Fig. 8 shows the tilting cylinder 15 when being retracted from the tilted position TP as indicated by the downwards directed arrow at the operational pressure P2_3. The pump 12 is reversed in direction. A hydraulic fluid is returned through the suction line 26 and through the flow restrictor 70 via the first pull connection 241 into the pull chamber 22. Further, hydraulic fluid is discharged from the push chamber 23 through the main pressure line 271 via the check valve 39 to the reservoir 11. A check valve 46 in the bypass line 272, a nonreturn check valve, prevents a fluid flow through the de-aerator valve 4. The nonreturn check valve 46 allows a one-way flow direction to the pull chamber 22 of the tilting cylinder 15. The bypass line 272 is closed by the nonreturn check valve 46 when a fluid flow is reversed in a direction away from the second pull connection 242. The X-mark indicates a closure of the outlet 43 by the check valve 46 at this step of the tilting operation.

A pressure drop will occur over the de-aerator valve 4 which will cause the biased valve piston 44 to return to the normal position in which a fluid communication between the inlet 42 and the outlet 43 is open. As shown in fig. 8, the de-aerator valve 4 is illustrated in the open position.

As further shown in fig. 9, after the re-opening the de-aerator valve 4, the pressure operated check valve 39 may close the main pressure line 271 when an operational pressure P decreases below a pressure value P2_3. The second X-mark in the main pressure line 271 indicates that besides the bypass line 272, also the main pressure line 271 is now closed. The drive unit 10 may then switched off, and the tilting cylinder 15 is in a stable position. Herewith, the nonreturn check valve 46 and the pressure operated check valve 39 provide a holding function for the piston-piston rod assembly at any sliding position.

Fig. 10 and 11 show an embodiment of the valve piston 44 of the de-aerator valve 4 of the hydraulic tilting device 1 in respectively the open position OP and closed position CP. The valve piston body 440 is shown in further detail. The valve piston body 440 has a piston channel 441 for establishing a fluid communication in between the inlet 42 and the outlet 43. Here, the valve piston body 440 has a narrowed head portion. The valve piston body 440 has a piston stem 444 at a bottom region. The piston stem 444 is enclosed by the spring 45. The piston stem serves as a stopper determining a valve piston stroke and contributes to an accurate positioning of the valve piston 44 in the closed position CP. In the closed position CP as shown in fig. 11, a piston block seal 442 at the head portion of the valve piston 44 mates with the position of the outlet 43 in the valve housing 40 to seal off the outlet 43. At a bottom region, the valve piston 44 comprises at least one piston seal 443 which is here a common O-ring.

Fig.12 and 13 show an alternative embodiment of a de-aerator valve 4 having a rotatable valve piston body 440 instead of a slidable valve piston body. The rotatable valve piston body 440 is biased by a spring 45 in an open position as shown in fig. 11. The valve piston body 440 is positioned inside a piston chamber 41 of a valve housing 40 which has an inlet 42 and an outlet 43. Under pressure, the valve piston body 440 rotates about a pivot axis over an angle α to close the outlet 43, as shown in fig. 13. Herewith, this embodiment of the de-aerator valve 4 may operate in a similar manner in the hydraulic tilting device 1 according to the invention.

Fig. 14 shows an embodiment of the hydraulic tilting device 1 in which a de-aerator valve 4 is incorporated in a prior art hydraulic circuit as disclosed in US7.055.637B2.

In the hydraulic circuit, a pressure line 27 is fluidly connected to a pressure connection 25 of a tilting cylinder 15. A pilot operated check valve 39 with pilot line 391 is positioned in the pressure line 27 for carrying out a tilting motion. In the hydraulic circuit, a lost motion arrangement 6 is provided to allow the tilting cylinder 15 to move up and down in the driving position, wherein the vehicle cabin is suspended relative to the chassis. The lost motion arrangement 6 comprises several sub-circuits of hydraulic components which each provides a particular function. An anti suction arrangement 38 is provided which is positioned in the pressure line 27 upstream of the check valve 39. The anti suction arrangement 38 includes parallelly arranged opposite directed biased check valves which open when a predetermined threshold pressure value is exceeded.

The lost-motion arrangement 6 further comprises a first control valve 3.1.

Here, the control valve 3.1 is a 2-way/2-position valve. The control valve 3.1 is normally closed under spring tension and can be switched to open by a first control line 331 connected to the pressure line 27 and/or a second control line 332. When a predetermined hydraulic pressure is achieved in the pressure line 27, the control valve 3.1 opens and hydraulic fluid is supplied to the push chamber 23 of the tilting cylinder. A third control line 333 is connected in parallel with a spring to set the control valve 3.1 in a normally closed position. When pressure increases, the control valve 3.1 switches to an open position which is here a bi-directional open position.

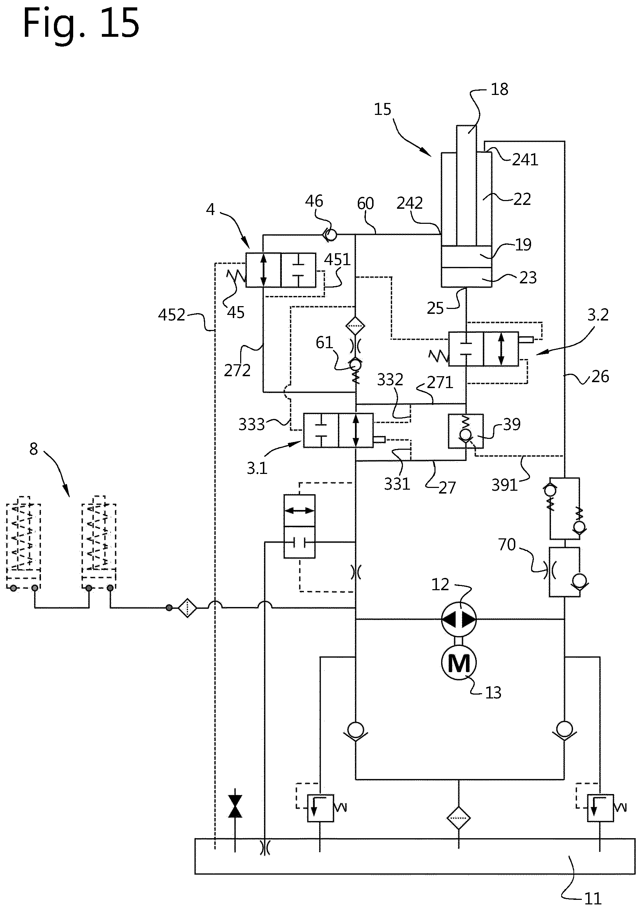

The control valve 3.1 has a first valve port 31 which is fluidly connected with a main pressure line 271 and a bypass line 272 which are fluidly connected to the tilting cylinder. The pressure line 27 is branched between the first valve port 31 and the pressure connection 25 into the main pressure line 271 and the bypass line 272. Here, to simplify the illustration, a first and second pressure connection 25 are separately illustrated, but in practice these can be embodied as incorporated into one single pressure connection as shown in fig. 15. The control valve 3.1 has a second valve port 32 which is fluidly connected to the pressure line 27.

The de-aerator 4 is connected in parallel with a subcircuit forming the lost-motion arrangement 6. The lost-motion arrangement fluidly interconnects the pull chamber 22 and the push chamber 23. A lost-motion passage 60 including a biased nonreturn valve 61 is arranged between two ports which open out in the cylinder space of the tilting cylinder 15 and which are here formed by the second pull connection 242 and pressure connection 25. The nonreturn valve 61 in the lost-motion passage 60 closes in a direction to the pull connection 242. When the hydraulic tilting device 1 is out of operation, the subcircuit of the lost-motion arrangement serves to allow a cabin to move up and down in suspension. The piston-piston rod assembly is freely movable at a region of the tilting cylinder below the second pull connection 242.

Here, as shown, the bypass line 272 is branched from the pressure line 27 after the control valve 3.1. The de-aerator valve 4 is indicated by the same valve symbol as illustrated in fig. 1, but has in addition a de-aerator control line 452 which is connected to the closed reservoir 11. In an alternative embodiment, the bypass line 272 may be branched from the pressure line 27 before the control valve 3.1. The bypass line 272 may be branched upstream from the control valve 3.1. The bypass line 271 may be fluidly branched from the pressure line at a position between the anti-suction arrangement 38 and the control valve 3.1. It is remarked that the control valve 3.1 is set in an open position by hydraulic pressure provided by the first and second control line 331, 332 which are in fluid communication with the push chamber 23.

Here, in fig. 14, the reservoir 11 is a closed reservoir which has an interior which is sealed off from the outside air. A pressure-relief valve limits the pressure in the reservoir 11 to a predetermined super atmospheric pressure, for example to a pressure of 1.5 bar above the outside air pressure. In addition to a spring force, this reservoir pressure is used to operate the de-aerator valve 4.

In addition to the de-deaerator valve 4, a nonreturn valve 46 is provided in the bypass line 272. The bypass line is fluidly connected to the lost-motion passage 60 at a position in between the lost motion nonreturn valve 61 and the second pull connection 242. The nonreturn valve 46 is positioned in between an outlet 43 of the de-aerator valve 4 and the pull connection 242 the cylinder housing 16. The nonreturn valve 46 closes in a direction to the de-aerator valve 4. The non-return valve 46 serves to close off the de-aerator valve as explained with reference to fig. 8.

The prior art hydraulic circuit is now updated by incorporating the de-aerator valve 4 to obtain a smooth operation in an initial stage of the hydraulic tilting device by substantially eliminating a trapped air volume inside the pull chamber 23 of the tilting cylinder 15.

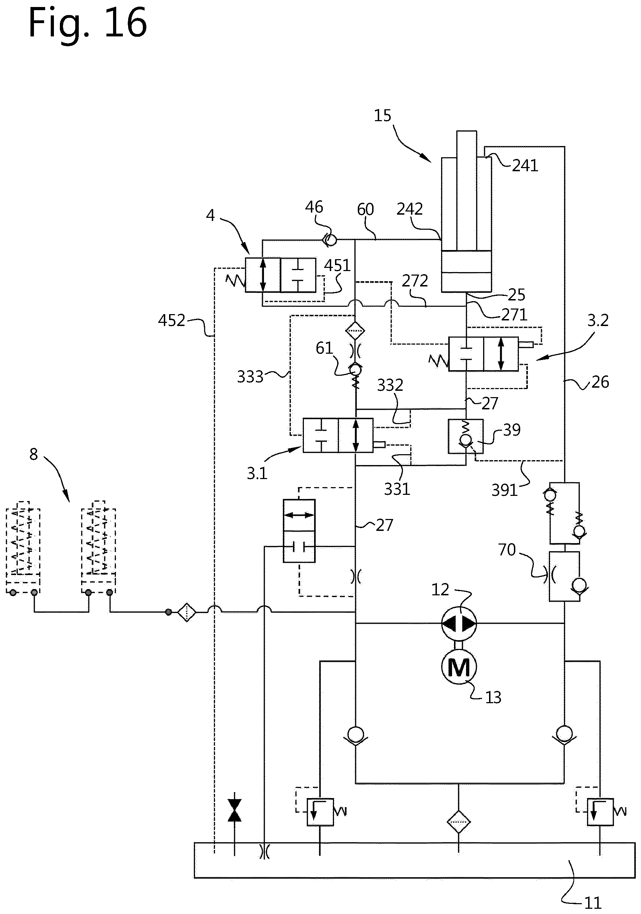

Each of Fig. 15 and 16 show an alternative hydraulic circuit of a hydraulic tilting device according to the invention. In this hydraulic circuit, a second control valve 3.2 is provided in addition to the first control valve 3.1. The second control valve 3.2 provides an anti-suction arrangement. The control valve 3.2 is a two way/two position pressure operated control valve.

The control valve 3. 2 is controlled by three control lines and a spring. Here, at least one latch 8 is incorporated in the hydraulic circuit. The latch 8 is fluidly connected to the pressure line 27.

Like in fig. 14, the de-aerator valve 4 is together with a nonreturn valve 46 fluidly connected in parallel with a lost-motion nonreturn valve 61 in a lost-motion passage 60. In Fig. 15, the de-aerator valve 4 is positioned in a bypass line 272 which has a bypass line start at a position in between the first control valve 3.1 and the lost motion nonreturn valve 61. The pressure line 27 is branched into the main pressure line 271 and the bypass line 272 after the first control valve 3.1 and before the second control valve 3.2. In Fig. 16, the deaerator valve 4 is positioned in a bypass line 272 which has a bypass line start at a position in between the push connection 25 and the second control valve 3.2. The pressure line 27 is branched into the main pressure line 271 and the bypass line 272 after the second control valve 3.2 before the pressure connection 25. In both configurations, the bypass line 272 has a bypass line end which is fluidly connected to the lost motion passage 60 at a position in between the lost motion nonreturn valve 61 and the second pull connection 242.

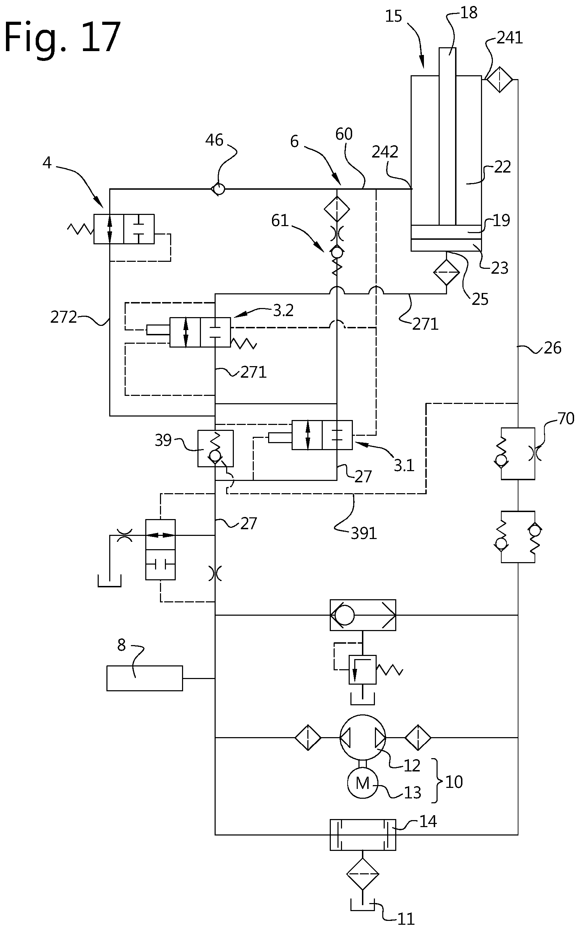

Fig. 17 shows an alternative embodiment of a hydraulic circuit of a hydraulic tilting device according to the invention. Many hydraulic features are analogous to the hydraulic circuit as shown in fig. 14. Here, in fig. 17, an open type reservoir 11 is incorporated. The de-aerator valve 4 is integrated in a lost-motion arrangement subcircuit 6. The de-aerator valve 4 is positioned in a bypass line 272 which is branched from the pressure line 27 at a position downstream the pilot operated check valve 39 and at a position in between the first control valve 3.1 and the second control valve 3.2. The bypass line 272 bypasses the second control valve 3.2 and the lost motion nonreturn valve 61. In the initial stage of a tilting operation, by pressurising the pressure line 27, the first control valve 3.1 will be set by the first and second control line 331, 332 to an open position, whereafter hydraulic fluid will flow through the bypass line 272 through the pull chamber 22 to discharge any intruded air volume. As explained above, in the initial stage, the second control valve 3.2 will remain closed until a predetermined operational pressure is exceeded.

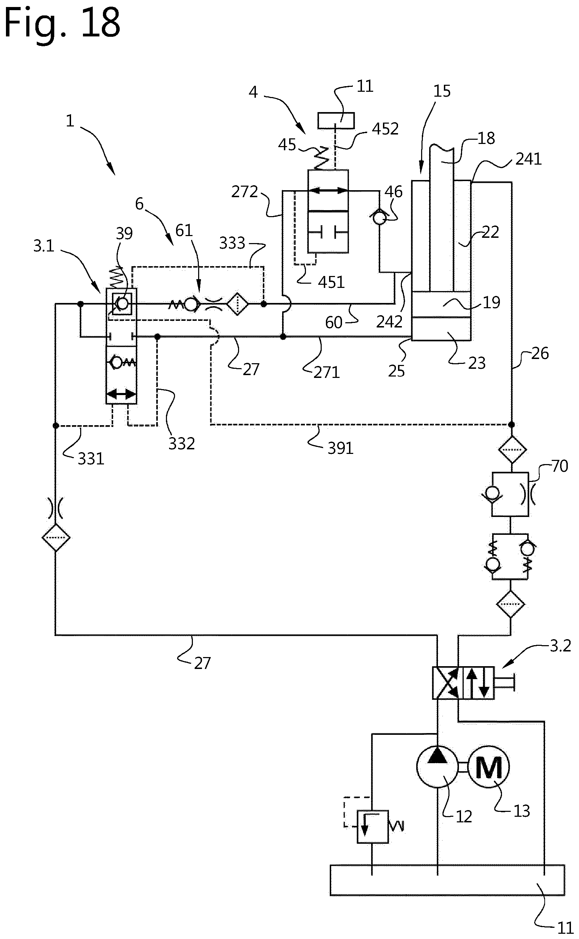

Fig. 18 shows another hydraulic circuit for operating a hydraulic tilting device 1 including a lost-motion arrangement 6. This hydraulic circuit corresponds with a hydraulic circuit as disclosed in DE197.30.499B4 in the name of Weber Hydraulik GmbH.

The hydraulic tilting device 1 has a main control valve 3.1 in the form of a four-way two-position control valve held in the closed position by a spring. A first and second control line 331, 332 are provided for opening and a third control line 333 further one for closing the main control valve 3.1. Here, a pilot operated check valve 39 (POCV) is incorporated in the main control valve 3.1. In comparison with the POCV of fig. 17, this POCV lacks a spring return. The POCV is open in a flow direction to the tilting cylinder and closed in a flow direction from the tilting cylinder. To control the POCV, the POCV is fluidly connected by a pilot line 391 to the suction line. At operational pressure, the POCV is open to enable a tilting motion. When operational pressure is below a predetermined pressure value, the POCV is closed. Herewith, the POCV provides a hold function.

The first control line 331 is connected to a hydraulic fluid pressure line 27 between the main control valve 3.1 and a two position control valve 3.2. The second control line 332 is connected to a sector of the same line 27 between the main control valve and a push chamber 23 of the tilting cylinder 15 on the piston side. The third control line 333 is connected to a branch of the connecting line 27 forming a lost motion passage 60 including the lost-motion nonreturn valve 61 and extending to the piston-rod-side cylinder pull chamber 22.

The prior art hydraulic circuit is improved according to the invention by introducing the de-aerator valve 4 in a bypass line 272. The bypass line is branched from a position in the pressure line 27 downstream the main control valve 3.1 and extends to the second pull connection 242 of the tilting cylinder 15. Further, the bypass line 272 includes a nonreturn valve 46. Analogous to Fig. 15-17, the de-aerator valve 4 is positioned in the bypass line 272. The de-aerator valve 4 bypasses the lost-motion nonreturn valve 61. Under pressure, the main control valve 3.1 is switched open and a bypass line start is in fluid communication with a pressure line 27 branching point positioned upstream the main control valve 3.1. A downstream bypass line end is fluidly connected to a sector of the lost-motion passage 60 after the lost-motion nonreturn valve 61 at the second pull connection 242. Herewith, the de-aerator valve 4 bypasses the lost-motion nonreturn valve 61. Herewith, the improvement provided by the presence of the de-aerator valve 4 incorporated in the hydraulic circuit enables a discharge of an intruded air volume in the pull chamber of the tilting cylinder which is beneficial in obtaining a smooth operation of the hydraulic tilting device during its lifetime.

Further, as shown in the hydraulic circuit of fig. 14-18, a one-way flow restrictor 70 may be positioned in the suction line 26. A fluid flow is restricted in a direction away from the pull chamber to generate a pressure increase in case of extension of the piston-piston rod assembly. Substantially no flow resistance is generated when retracting the piston-piston rod assembly back to the driving position.

Numerous variants are possible in addition to the embodiment shown in the figures. For example, in a variant of the illustrated embodiment of the hydraulic tilting device including a motorised pump, the pump may be a manual pump to be operated by hand. Although the present invention has been described in detail, it will be apparent to those skilled in the art that various changes and modifications can be made as long as not departing from the scope of the invention as hereinafter claimed.

**Reference signs list:**

| | | | |
|---|---|---|---|
| DP | retracted, driving position | 12 | pump |
| TP | tilt position | 120 | port; pressure port |
| OP | open position | 121 | port; suction port |
| CP | closed position | 13 | motor |
| AV | air volume | 14 | shuttle valve |
| P2_1 | initial pressure | 15 | tilting cylinder |
| P2_2 | increased pressure | 16 | cylinder housing |
| P2_3 | operating pressure | 18 | piston rod |
| 1 | tilting device | 19 | piston |
| 10 | drive unit | 22 | pull chamber |
| 11 | reservoir | 23 | push chamber |
| 24 | pull connection | 4 | de-aerator valve |
| 241 | first pull connection | 40 | valve housing |
| 242 | second pull connection | 41 | piston chamber |
| 25 | pressure connection | 42 | inlet |
| 26 | connecting line; suction line | 43 | outlet |
| 27 | connecting line; pressure line | 44 | valve piston |
| 271 | main pressure line | 440 | valve piston body |
| 272 | bypass line | 441 | piston channel |
| | | 442 | piston block seal |
| 3 | control valve | 443 | piston seal; O-ring |
| 30 | two-position valve | 444 | piston stem |
| 3.1 | first control valve; | 45 | spring |
| 3.2 | second control valve | 451 | de-aerator control line |
| | | 452 | second de-aerator control line |
| 31 | first valve port | 46 | nonreturn valve; check valve |
| 32 | second valve port | | |
| 33 | control line | 6 | lost-motion arrangement |
| 331 | first control line | 60 | lost-motion passage |
| 332 | second control line | 61 | lost-motion nonreturn valve |
| 333 | third control line | | |
| | | 70 | flow restrictor |
| 38 | anti suction arrangement | | |
| 39 | pilot operated check valve | 8 | latch |
| 391 | pilot line | | |

## Claims

1. Hydraulic tilting device (1) for tilting a cab of a vehicle between a driving position (DP) and a tilted position (TP), comprising:
- a double acting hydraulic tilting cylinder (15), a so called cab tilt cylinder, for providing a tilting motion, the double-acting hydraulic tilting cylinder (15) having a cylinder housing (16) including a cylinder space in which a piston-piston rod assembly (18, 19) is movable in a reciprocating manner, the piston-piston rod assembly (18, 19) dividing the cylinder space into a pull chamber (22) and a push chamber (23) for moving the piston-piston rod assembly between a tilt position (TP) and a retracted position, a so-called driving position (DP), wherein the the double-acting hydraulic tilting cylinder comprises a lost-motion arrangement (6) configured to provide a lost-motion range in which the piston-piston rod assembly is able to move up and down if the cab, which is in its driving position (DP), executes spring movements, wherein the pull chamber (22) has a first pull connection (241) which is fluidly connected to a suction line (26) for discharging hydraulic fluid from the pull chamber and a second pull connection (242) being in fluid communication with the pull chamber (22) when the piston-piston rod assembly is in the retracted position that is its driving position, and wherein the push chamber (23) has a pressure connection (25) for pressurising the push chamber (23) by a pressure line (27);
- a drive unit (10) including a reservoir (11) for storing hydraulic fluid and a pump (12) for pressurising the the double-acting hydraulic tilting cylinder (15), wherein the drive unit (10) is fluidly connected by a main pressure line (271) to the pressure connection (25) of the push chamber (23) and fluidly connected by a bypass line (272) to the second pull connection (242) of the pull chamber (22), wherein the bypass line (272) is arranged in parallel with the main pressure line (271);
- a flow restrictor (70) being positioned in the suction line (26); the hydraulic tilting device **characterised by**
- a pressure operated de-aerator valve (4) configured to enable a discharge of an air volume out of the pull chamber (22), wherein the de-aerator valve (4) is positioned in the bypass line (272) for opening and closing the bypass line, wherein the de-aerator valve (4) has a normally open mode.

2. Hydraulic tilting device (1) according to claim 1, wherein the de-aerator valve (4) is a pressure operated two position control valve, wherein the de-aerator valve (4) closes under pressure.

3. Hydraulic tilting device (1) according to claim 1 or 2, wherein the de-aerator valve (4) includes a flow restrictor.

4. Hydraulic tilting device (1) according to any of the claims 1-3, wherein the de-aerator valve (4) has a bi-directional open mode.

5. Hydraulic tilting device (1) according to any of the preceding claims, wherein the flow restrictor (70) in the suction line (26) is a one-way flow restrictor serving to restrict a hydraulic fluid flow only in a flow direction away from the pull chamber.

6. Hydraulic tilting device (1) according to any of the preceding claims, wherein the de-aerator valve (4) comprises a valve housing (40) including a piston chamber (41) and an inlet (42) and an outlet (43) for a fluid flow through the piston chamber (41), wherein a biased valve piston (44) is positioned in the piston chamber (41), wherein, in operation, the outlet (43) is normally open and only closed by a movement of the valve piston (44) when hydraulic pressure on the valve piston (44) increases.

7. Hydraulic tilting device (1) according to claim 6, wherein the de-aerator valve (4) comprises a spring (45) which acts on the valve piston (44) to keep the outlet (43) open in absence of operational hydraulic pressure.

8. Hydraulic tilting device (1) according to claim 6 or 7, wherein the valve piston (44) has a valve piston body (440) which comprises a piston channel (441) forming a passageway through the valve piston (44) for establishing an open communication between the inlet (42) and the outlet (43) of the piston chamber (41).

9. Hydraulic tilting device (1) according to any of the preceding claims 6-8, wherein the valve piston (44) has a piston block seal (442) at an outer circumference for blocking the inlet (42) or outlet (43) in a blocking position of the valve piston (44).

10. Hydraulic tilting device (1) according to any of the preceding claims, wherein a nonreturn valve (46) is provided in the bypass line (272) for blocking a fluid flow in a flow direction away from the pull chamber.

11. Hydraulic tilting device (1) according to claim 10, wherein the nonreturn valve (46) is positioned between the outlet (43) of the de-aerator valve (4) and the second pull connection (242).

12. Hydraulic tilting device (1) according to claim 11, wherein the pressure line (27), in particular the main pressure line (271), is provided with a control valve (3) for opening or closing the pressure line (27);

13. Hydraulic tilting device (1) according to claim 12, wherein the control valve (3) of the lost-motion arrangement is a two-position valve, in particular a pressure control valve, for opening and closing the main pressure line (271).

14. Cabin tilt system for overturning a driving cab -for tilting a cabin to a tilted position- in which the cabin tilt system comprises a hydraulic tilting device according to any of the preceding claims.

15. Vehicle comprising a cabin tilt system according to claim 14.

## Patentansprüche

1. Hydraulische Kippvorrichtung (1) zum Kippen einer Kabine eines Fahrzeugs zwischen einer Fahrposition (DP) und einer Kippposition (TP), umfassend:
- einen hydraulischen doppeltwirkenden Kippzylinder (15), einen sogenannten Kabinekippzylinder, zum Vorsehen einer Kippbewegung, wobei der hydraulische doppeltwirkenden Kippzylinder (15) ein Zylindergehäuse (16) aufweist, das einen Zylinderraum umfasst, in dem eine Kolben-Kolbenstange-Baugruppe (18, 19) wechselseitig beweglich ist, wobei die Kolben-Kolbenstange-Baugruppe (18, 19) den Zylinderraum in eine Zugkammer (22) und eine Schubkammer (23) teilt, um die Kolben-Kolbenstange-Baugruppe zwischen einer Kippposition (TP) und einer eingefahrenen Position, einer sogenannten Fahrposition (DP), zu bewegen, wobei der hydraulische doppeltwirkenden Kippzylinder eine Leerlaufanordnung (6) umfasst, die dazu ausgelegt ist, einen Leerlaufbereich vorzusehen, in dem die Kolben-Kolbenstange-Baugruppe auf- und abwärts beweglich ist, wenn die Kabine, das sich in der Fahrposition (DP) befindet, Federbewegungen ausführt, wobei die Zugkammer (22) eine erste Zugverbindung (241), die mit einer Saugleitung (26) in Fluidverbindung steht, um Hydraulikfluid von der Zugkammer abzulassen, und eine zweite Zugverbindung (242), die mit der Zugkammer (22) in Fluidverbindung steht, wenn sich die Kolben-Kolbenstange-Baugruppe in der eingefahrenen Position befindet, die deren Fahrposition ist, aufweist, und wobei die Schubkammer (23) eine Druckverbindung (25) zum Druckbeaufschlagen der Schubkammer (23) durch eine Druckleitung (27) umfasst;
- eine Antriebseinheit (10), die einen Behälter (11) zum Speichern von Hydraulikfluid und eine Pumpe (12) zum Druckbeaufschlagen des hydraulischen Doppeltwirkenden Kippzylinders (15) umfasst, wobei die Antriebseinheit (10) durch eine Hauptdruckleitung (271) mit der Druckverbindung (25) der Schubkammer (23) in Fluidverbindung steht und durch eine Bypassleitung (272) mit der zweiten Zugverbindung (242) der Zugkammer (22) in Fluidverbindung steht, wobei die Bypassleitung (272) parallel zur Hauptdruckleitung (271) angeordnet ist;
- einen Durchflussbegrenzer (70), der in der Saugleitung (26) positioniert ist; wobei die hydraulische Kippvorrichtung **gekennzeichnet ist durch**
- ein druckbetriebenes Entlüftungsventil (4), das dazu ausgelegt ist, das Ablassen eine Luftvolumens aus der Zugkammer (22) zuzulassen, wobei das Entlüftungsventil (4) in der Bypassleitung (272) positioniert ist, um die Bypassleitung zu öffnen und zu schließen, wobei das Entlüftungsventil (4) einen Schließermodus aufweist.

2. Hydraulische Kippvorrichtung (1) nach Anspruch 1, wobei das Entlüftungsventil (4) ein druckbetriebenes Zweipositionsregelventil ist, wobei sich das Entlüftungsventil (4) unter Druck schließt.

3. Hydraulische Kippvorrichtung (1) nach Anspruch 1 oder 2, wobei das Entlüftungsventil (4) einen Durchflussbegrenzer umfasst.

4. Hydraulische Kippvorrichtung (1) nach einem der Ansprüche 1-3, wobei das Entlüftungsventil (4) einen bidirektionalen Öffnungsmodus aufweist.

5. Hydraulische Kippvorrichtung (1) nach einem der vorstehenden Ansprüche, wobei der Durchflussbegrenzer (70) in der Saugleitung (26) ein Einwegdurchflussbegrenzer ist, der dazu dient, einen Hydraulikfluiddurchfluss nur in eine Durchflussrichtung von der Zugkammer weg zu begrenzen.

6. Hydraulische Kippvorrichtung (1) nach einem der vorstehenden Ansprüche, wobei das Entlüftungsventil (4) ein Ventilgehäuse (40) umfasst, das eine Kolbenkammer (41) und einen Einlass (42) und einen Auslass (43) für einen Fluiddurchfluss durch die Kolbenkammer (41) umfasst, wobei ein vorgespannter Ventilkolben (44) in der Kolbenkammer (41) positioniert ist, wobei der Auslass (43) im Betrieb normalerweise geöffnet ist und nur durch eine Bewegung des Ventilkolbens (44) geschlossen wird, wenn der Hydraulikdruck auf den Ventilkolben (44) steigt.

7. Hydraulische Kippvorrichtung (1) nach Anspruch 6, wobei das Entlüftungsventil (4) eine Feder (45) umfasst, die auf den Ventilkolben (44) wirkt, um den Auslass (43) in Abwesenheit eines Betriebshydraulikdrucks geöffnet zu lassen.

8. Hydraulische Kippvorrichtung (1) nach Anspruch 6 oder 7, wobei der Ventilkolben (44) einen Ventilkolbenkörper (440) aufweist, der einen Kolbenkanal (441) umfasst, der einen Durchgang durch den Ventilkolben (44) ausbildet, um eine offene Kommunikation zwischen dem Einlass (42) und dem Auslass (43) der Kolbenkammer (41) herzustellen.

9. Hydraulische Kippvorrichtung (1) nach einem der vorstehenden Ansprüche 6-8, wobei der Ventilkolben (44) eine Kolbenblockdichtung (442) an einem Außenumfang aufweist, um den Einlass (42) oder Auslass (43) in einer Blockierposition des Ventilkolbens (44) zu blockieren.

10. Hydraulische Kippvorrichtung (1) nach einem der vorstehenden Ansprüche, wobei ein Rückschlagventil (46) in der Bypassleitung (272) vorgesehen ist, um einen Fluiddurchfluss in eine Durchflussrichtung von der Zugkammer weg zu blockieren.

11. Hydraulische Kippvorrichtung (1) nach Anspruch 10, wobei das Rückschlagventil (46) zwischen dem Auslass (43) des Entlüftungsventils (4) und der zweiten Zugverbindung (242) positioniert ist.

12. Hydraulische Kippvorrichtung (1) nach Anspruch 11, wobei die Druckleitung (27), insbesondere die Hauptdruckleitung (271) mit einem Regelventil (3) zum Öffnen oder Schließen der Druckleitung (27) versehen ist.

13. Hydraulische Kippvorrichtung (1) nach Anspruch 12, wobei das Regelventil (3) der Leerlaufanordnung ein Auf-Zu-Ventil, insbesondere ein Druckregelventil, zum Öffnen und Schließen der Hauptdruckleitung (271) ist.

14. Kabinekippsystem zum Neigen eines Fahrerhaus -zum Kippen einer Kabine in eine Kippposition, in der die Kabinekippsystem eine hydraulische Kippvorrichtung nach einem der vorstehenden Ansprüche umfasst.

15. Fahrzeug umfassend ein Kabinekippsystem nach Anspruch 14.

## Revendications

1. Dispositif d'inclinaison hydraulique (1) destiné à incliner la cabine d'un véhicule entre une position de conduite (DP) et une position inclinée (TP), comprenant :
- un vérin d'inclinaison hydraulique à double effet (15), appelé vérin d'inclinaison de cabine, destiné à fournir un mouvement d'inclinaison, le vérin d'inclinaison hydraulique à double effet (15) comportant un carter de vérin (16) comprenant un espace de vérin dans lequel un ensemble piston-tige de piston (18, 19) est mobile en va-et-vient, l'ensemble piston-tige de piston (18, 19) divisant l'espace de vérin en une chambre de traction (22) et une chambre de poussée (23) pour déplacer l'ensemble piston-tige de piston entre une position d'inclinaison (TP) et une position rétractée, appelée position de conduite (DP), le vérin d'inclinaison hydraulique à double effet comprenant un agencement à perte de mouvement (6) conçu pour fournir une plage de perte de mouvement dans laquelle l'ensemble piston-tige de piston peut monter et descendre si la cabine, qui se trouve dans sa position de conduite (DP), exécute des mouvements de ressort, la chambre de traction (22) comprenant un premier raccord de traction (241) qui est en communication fluidique avec une conduite d'aspiration (26) pour évacuer le fluide hydraulique depuis la chambre de traction et un second raccord de traction (242) qui est en communication fluidique avec la chambre de traction (22) lorsque l'ensemble piston-tige de piston est dans la position rétractée qui est sa position de conduite, et la chambre de poussée (23) comprenant un raccord de pression (25) pour la mise sous pression de la chambre de poussée (23) par une conduite de pression (27) ;
- une unité d'entraînement (10) comprenant un réservoir (11) destiné à stocker du fluide hydraulique et une pompe (12) destinée à mettre sous pression le vérin d'inclinaison hydraulique à double effet (15), l'unité d'entraînement (10) étant mise en communication fluidique par une conduite de pression principale (271) avec le raccord de pression (25) de la chambre de poussée (23) et en communication fluidique par une conduite de dérivation (272) avec le second raccord de traction (242) de la chambre de traction (22), la conduite de dérivation (272) étant disposée parallèlement à la conduite de pression principale (271) ;
- un limiteur de débit (70) étant positionné dans la conduite d'aspiration (26) ; le dispositif d'inclinaison hydraulique étant **caractérisé par**
- une soupape de désaération actionnée par pression (4) conçue pour permettre une évacuation d'un volume d'air hors de la chambre de traction (22), la soupape de désaération (4) étant positionnée dans la conduite de dérivation (272) pour ouvrir et fermer la conduite de dérivation, la soupape de désaération (4) ayant un mode normalement ouvert.

2. Dispositif d'inclinaison hydraulique (1) selon la revendication 1, la soupape de désaération (4) étant une soupape de commande à deux positions actionnée par pression, la soupape de désaération (4) se fermant sous pression.

3. Dispositif d'inclinaison hydraulique (1) selon la revendication 1 ou 2, la soupape de désaération (4) comprenant un limiteur de débit.

4. Dispositif d'inclinaison hydraulique (1) selon l'une quelconque des revendications 1 à 3, la soupape de désaération (4) ayant un mode ouvert bidirectionnel.

5. Dispositif d'inclinaison hydraulique (1) selon l'une quelconque des revendications précédentes, le limiteur de débit (70) dans la conduite d'aspiration (26) étant un limiteur de débit unidirectionnel servant à limiter un débit de fluide hydraulique uniquement dans une direction d'écoulement à l'opposé de la chambre de traction.

6. Dispositif d'inclinaison hydraulique (1) selon l'une quelconque des revendications précédentes, la soupape de désaération (4) comprenant un carter de soupape (40) comprenant une chambre de piston (41) et une entrée (42) et une sortie (43) pour un écoulement de fluide à travers la chambre de piston (41), un piston de soupape sollicité (44) étant positionné dans la chambre de piston (41), en fonctionnement, la sortie (43) étant normalement ouverte et fermée uniquement par un mouvement du piston de soupape (44) lorsque la pression hydraulique sur le piston de soupape (44) augmente.

7. Dispositif d'inclinaison hydraulique (1) selon la revendication 6, la soupape de désaération (4) comprenant un ressort (45) qui agit sur le piston de soupape (44) pour maintenir la sortie (43) ouverte en l'absence de pression hydraulique de fonctionnement.

8. Dispositif d'inclinaison hydraulique (1) selon la revendication 6 ou 7, le piston de soupape (44) comprenant un corps de piston de soupape (440) qui comprend un canal de piston (441) formant un passage à travers le piston de soupape (44) pour établir une communication ouverte entre l'entrée (42) et la sortie (43) de la chambre de piston (41).

9. Dispositif d'inclinaison hydraulique (1) selon l'une quelconque des revendications précédentes 6 à 8, le piston de soupape (44) comprenant un joint de bloc de piston (442) au niveau d'une circonférence extérieure pour bloquer l'entrée (42) ou la sortie (43) dans une position de blocage du piston de soupape (44).

10. Dispositif d'inclinaison hydraulique (1) selon l'une quelconque des revendications précédentes, un clapet anti-retour (46) étant situé dans la conduite de dérivation (272) pour bloquer un écoulement de fluide dans une direction d'écoulement à l'opposé de la chambre de traction.

11. Dispositif d'inclinaison hydraulique (1) selon la revendication 10, le clapet anti-retour (46) étant positionné entre la sortie (43) de la soupape de désaération (4) et le second raccord de traction (242).

12. Dispositif d'inclinaison hydraulique (1) selon la revendication 11, la conduite de pression (27), en particulier la conduite de pression principale (271), étant pourvue d'une soupape de commande (3) pour ouvrir ou fermer la conduite de pression (27).

13. Dispositif d'inclinaison hydraulique (1) selon la revendication 12, la soupape de commande (3) de l'agencement à perte de mouvement étant une soupape à deux positions, en particulier une soupape de commande de pression, pour ouvrir et fermer la conduite de pression principale (271).

14. Système d'inclinaison de cabine pour renverser une cabine de conduite -pour incliner une cabine dans une position inclinée- le système d'inclinaison de cabine comprenant un dispositif d'inclinaison hydraulique selon l'une quelconque des revendications précédentes.

15. Véhicule comprenant un système d'inclinaison de cabine selon la revendication 14.
